(19) Europäisches Patentamt
European Patent Office
Office européen des brevets

(11) EP 2 656 004 B1

(12) **EUROPEAN PATENT SPECIFICATION**

(45) Date of publication and mention
of the grant of the patent:
**10.12.2014 Bulletin 2014/50**

(51) Int Cl.:
**G01B 11/02** (2006.01)    **G01B 11/06** (2006.01)
**E21B 21/06** (2006.01)

(21) Application number: **11808831.9**

(86) International application number:
**PCT/EP2011/006467**

(22) Date of filing: **21.12.2011**

(87) International publication number:
**WO 2012/084220 (28.06.2012 Gazette 2012/26)**

(54) **METHOD FOR ANALYZING AT LEAST A CUTTING EMERGING FROM A WELL, AND ASSOCIATED APPARATUS**

VERFAHREN ZUR ANALYSE VON MINDESTENS EINEM AUSSCHNITT AUS EINEM BOHRLOCH UND ZUGEHÖRIGE VORRICHTUNG

PROCÉDÉ POUR ANALYSER AU MOINS UN DÉBLAI DE FORAGE ÉMERGEANT À PARTIR D'UN PUITS, ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2010 EP 10306505**

(43) Date of publication of application:
**30.10.2013 Bulletin 2013/44**

(73) Proprietor: **Geoservices Equipements**
**95700 Roissy en France (FR)**

(72) Inventors:
• **KIMOUR, Farouk**
**F-95971 Roissy-en-France (FR)**
• **LIGNEUL, Patrice**
**F-92370 Chaville (FR)**

(74) Representative: **Ford, Michael Frederick et al**
**IP Law Dept**
**Schlumberger Cambridge Research Limited**
**High Cross**
**Madingley Road**
**Cambridge CB3 0EL (GB)**

(56) References cited:
**WO-A2-2009/105469    US-A- 3 804 523**
**US-A- 5 485 082    US-A1- 2004 179 210**
**US-B1- 6 233 966**

**Description**

The present invention concerns a method for analyzing at least a cutting emerging from a well.

When drilling an oil well or a well for another effluent (in particular gas, vapor, water), it is known to periodically recover solid samples contained in the drilling mud emerging from the well, in view of their analysis.

The recovered solid samples are visually analyzed to determine geological information on the nature of the formations which are drilled. Additionally, some analysis are carried out to determine the chemical and physical properties of the cuttings, for example the compositional and dimensional properties of the cuttings.

The above-mentioned analyses are carried out either in the vicinity of the well being drilled, for example in a specifically equipped cabin, or in a laboratory dedicated to the study of the cuttings, away from the drilling site.

The correct analysis of the cuttings contributes in determining the location of potential deposits of fluids contained in the formation, in particular by delimiting appropriate geological underground structures.

It is therefore very valuable to provide information on the cuttings as soon as they are recovered from the well by performing on-site analysis.

Considerable progress has been made in the analysis of the cuttings. In particular, very accurate analytical techniques can now be implemented directly on the drilling site, such as x-ray diffraction (XRD), x-ray fluorescence (XRF), microscopy and even nuclear magnetic resonance (NMR).

Although considerable information can be collected on a cutting, once it is extracted, a key issue remains in the determination of the depth at which the analyzed cutting was extracted.

In particular, if a lack of accuracy exists in the determination of the depth related to a particular cutting, the information obtained from the above-mentioned analytical techniques cannot be used as efficiently as it could.

In order to determine the position at which a cutting recovered at the surface was drilled, it is known to monitor precisely the flow rates of the pumps injecting mud in the well, as well as the flow rate of recovered mud emerging from the well.

A mathematical model can then be used to compute the transportation behavior of the cutting between the point at which it was drilled in the well, to the surface. Examples of models for cuttings transport are disclosed in SPE 28306, in SPE 77261, or in SPE 64646.

In these models, a drag coefficient of the cutting is a key parameter in determining the cutting behavior in the mud. This drag coefficient is empirically or semi empirically determined which may lead to large errors in the determination of the depth associated to each cutting.

In particular, the largest pieces of cuttings are very valuable for determining the chemical or physical information which is relevant to the cuttings analysis, for example porosity, chemical content, etc.

However, the large pieces of cuttings have often very odd shapes and are hence very sensitive to the flow condition within the drilling mud flowing out of the well. This is particularly the case when the mud flow regime is turbulent to optimize advection and to provide a better cleaning of the annular space.

One aim of the invention is to obtain a method for analyzing at least a cutting emerging from a well being drilled, which allows an accurate determination of the cutting position in the well, and which can nevertheless be implemented easily on site, in the vicinity of the well.

One particular aim of the invention is to easily and quickly obtain an accurate determination of a cutting drag coefficient, in order to increase the accuracy of a model estimating the cutting flow behavior from the time it was drilled to the time it was recovered at the surface.

To this aim, the invention concerns a method according to claim 1.

The method according to the invention comprises one or more of the following feature(s), taken in isolation or according to any possible technical combination(s):

-    the measuring apparatus comprises an optical measuring device;
     the measuring of the first distance comprising focusing the optical measuring device on the support surface and measuring a first focusing distance, the first distance being derived from the measured first focusing distance;
     the measuring of the second distance comprising a step of focusing on the top of the cutting and measuring a second focusing distance, the second distance being derived from the measured second focusing distance;
-    the method comprises a step of capturing an image of the cutting in at least a measurement plane, the method comprising determining at least a second representative dimension of the cutting based on a distance measured from the captured image;
-    the method comprises a step of determining the contour of the cutting on the image, the calculating step comprising determining the representative second dimension based on the measured contour;
-    the calculation step comprises calculating the moments of the surface S delimited by the contour with a predetermined density distribution, in particular a density distribution such as: $\rho=[1,(x,y \in S) ; 0,(x,y \notin S)]$;
-    the support surface has a contrast with at least one cutting to be analyzed;

- the method comprises analyzing a plurality of cuttings emerging from the well, the cuttings being separated from each other on the support surface;
- the method comprises recovering a sample of cuttings from the well, and sieving the sample to remove some of the recovered cuttings from the cuttings to be analyzed;
- the method comprises a step of calculating a drag coefficient of each cutting based on the first representative dimension calculated at the calculating step.

The invention will be better understood upon reading of the following description, taken purely as an example, and made in reference to the appended drawings in which:

- Figure 1 is a schematic view, taken in vertical section, of a drilling installation provided with a first cutting analysis assembly;
- Figure 2 is a schematic side view of the first cuttings analysis assembly;
- Figure 3 is a view taken from above of the supporting surface of a first cuttings analysis assembly, the supporting surface being loaded with cuttings;
- Figure 4 is a schematic view of a picture taken of the contour of a first cutting analyzed by the first cutting analysis assembly;
- Figure 5 is a view similar to Figure 4 in which the focus has been made on the supporting surface;
- Figure 6 is a view similar to Figure 5, in which the focus has been made on the top of the cutting;
- Figure 7 is a synoptic diagram of the main steps of a first cuttings analysis method according to the invention;
- Figure 8 is a synoptic diagram of the sample preparation step of the method shown in Figure 7;
- Figure 9 is a synoptic diagram of the sample measurement step of the method illustrated in Figure 7; and
- Figure 10 is a synoptic diagram of the calculation step of the method illustrated in Figure 7.

In everything which follows, the terms "upstream" and "downstream" are understood with respect to the normal direction of circulation of a fluid in a pipe.

A cuttings analysis assembly is used for example in a drilling installation 11 for a fluid production well, such as a hydrocarbon production well.

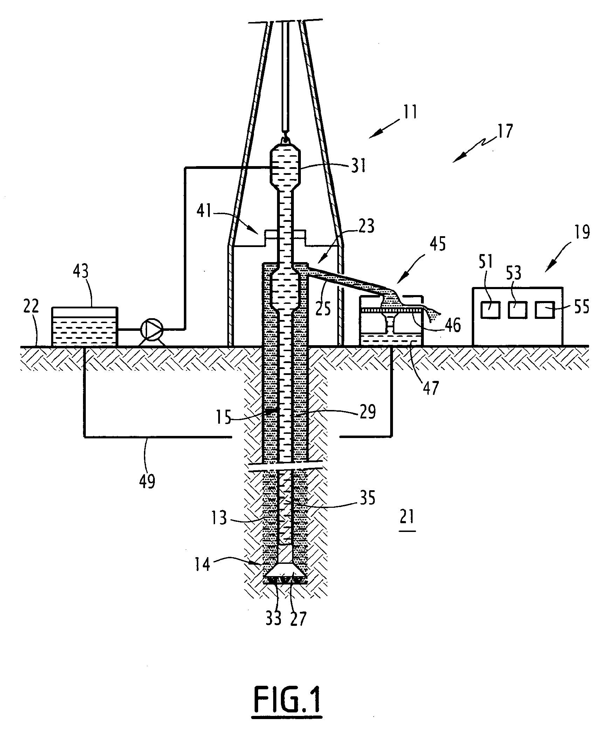

As illustrated in Figure 1, the installation 11 comprises a rotary drilling tool 15 drilling a cavity 14 in the ground, a surface installation 17, where drilling pipes are placed in the cavity 14 and a first cuttings analysis assembly 19.

A well 13 delimiting the cavity 14 is formed in the substratum 21 by the rotary drilling tool 15. At the surface 22, a well head 23 having a discharge pipe 25 closes the well 13.

The drilling tool 15 comprises a drilling head 27, a drill string 29 and a liquid injection head 31.

The drilling head 27 comprises means 33 for drilling through the rocks and/or sediments of the substratum 21, the drilling operation producing solid drilling residues or "cuttings". The drilling head 27 is mounted on the lower portion of the drill string 29 and is positioned in the bottom of the drilling pipe 13.

The drill string 29 comprises a set of hollow drilling pipes. These pipes delimit an internal space 35 which makes it possible to bring a drilling fluid from the surface 22 to the drilling head 27. To this end, the liquid injection head 31 is screwed onto the upper portion of the drill string 29.

The drilling fluid is in particular a drilling mud, in particular a water-based or oilbased drilling mud.

The surface installation 17 comprises means 41 for supporting the drilling tool 15 and driving it in rotation, means 43 for injecting the drilling liquid and a shale shaker 45, for receiving and treating the effluent emerging from the well.

The injection means 43 are hydraulically connected to the injection head 31 in order to introduce and circulate the drilling fluid in the inner space 35 of the drill string 29.

The shale shaker 45 collects the drilling fluid charged with cuttings which emerges from the discharge pipe 25. The shale shaker 45 is equipped with sieves 46 to allow the separation of the solid drilling residues or cuttings, from the drilling mud.

The shale shaker 45 also comprises a tank 47 located under the sieves 46 to recover the drilling mud deprived of cuttings.

The surface installation 17 further comprises a recirculation duct 49 connecting the recovery tank 47 to the injection means 43 to re-circulate the mud collected in the tank 47 to the injection means 43.

The cuttings analysis assembly 19 is intended to prepare, to measure and to analyse the cuttings contained in the mud emerging from the discharge pipe 25.

The cuttings are in particular collected at the sieves 46 of the shale shaker 45. These cuttings are made of small pieces of rocks and/or sediments which are generated of the cavity 14.

The average maximal dimension of the cuttings in particular ranges from 0.25 mm to 3 mm, and is generally lower than 2 mm. The cuttings which are analyzed in the analysis assembly 19 generally have a dimension higher than 1 mm.

As will be seen below, the shape of the cuttings can be regular, i.e. of substantially circular or elongated shape, such as ovoid or ellipsoid. Alternatively, the shape of the cuttings can be very irregular.

As shown in Figure 1, the cuttings analysis assembly 19 comprises a sample preparation unit 51, a sample measuring unit 53 and a calculation unit 55 for determining at least one specific dimension of a cutting and for calculating the depth at which the cutting was drilled.

The sample preparation unit 51 comprises a cleaning and drying stage, for cleaning and drying the cuttings recovered from the shale shaker 45 and advantageously, a sieving stage for preparing at least two different classes of cuttings by filtering the cuttings according to their maximal dimension on a sieve.

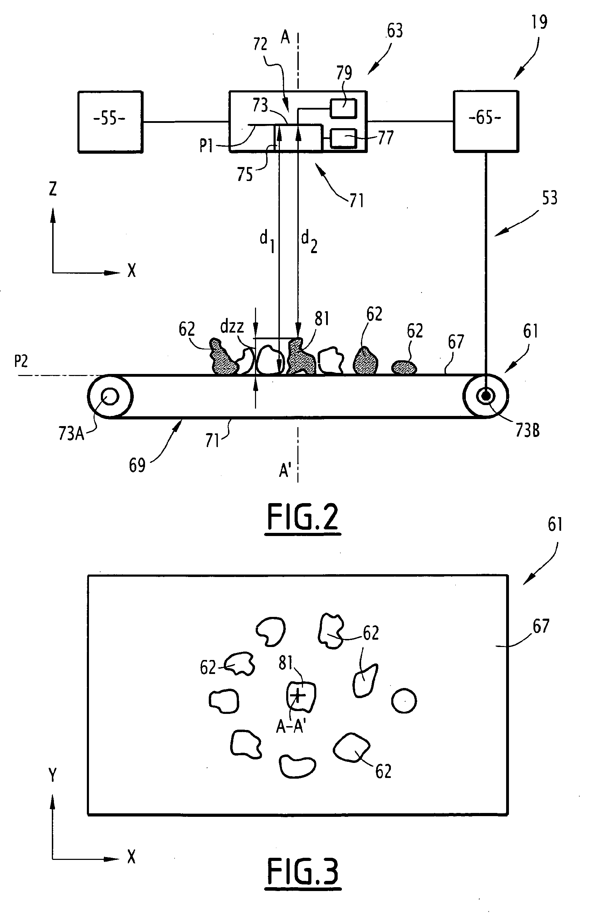

As illustrated in Figure 2, the sample measurement unit 53 comprises a support 61 for receiving the cuttings 62 to be analysed, a cutting measurement device 63 located above and apart from the cuttings 62 laid on the support 61 and a positioning apparatus 65 for relatively positioning the measurement apparatus 63 and the support 61.

The support 61 has a cuttings support surface 67 which carries the cuttings 62.

Advantageously, the support surface 67 is planar, at least in the area facing the measurement apparatus 63.

In the example of Figure 2, the measurement surface 67 is located in an horizontal plane (X, Y) shown in Figure 3.

The support surface 67 can be located at the top of a mobile belt conveyor 69. In a particular example, the conveyor 69 comprises a belt 71 rolled around two rollers 73A, 73B to allow a movement of the cuttings on the surface 67 relative to the measurement apparatus 63.

In a variation, the support 61 consists of a fixed support surface 67.

The support surface 67 has an appearance which provides contrast with the cuttings 62 laid on the surface 67, in order to make the cuttings 62 distinguishable from the surface 67, when detected by the measurement apparatus 63.

When the measurement apparatus 63 is an optical measurement apparatus, the visual contrast is optimized at the upper surface of the cuttings 62 in reference with the surface 67 . The thickness of the cutting is obtained by adjusting the maximum constrat varying along z the focal plan of the optical device. As indicated above, the optical measurement apparatus 63 is located above and apart from the cuttings support surface 67 and from each cutting 62.

In the embodiment of Figure 2, the measurement apparatus 63 is an optical measurement device. In particular, the measurement apparatus 63 comprises a microscope 71 and a camera 72.

The optical measurement device 63 has a detector 73, an optics 75 able to focus light arising from the outside of the measurement apparatus 63 on the detector 73, means 77 for adjusting the optics 75 and modifying the focusing distance of the optics 75 and means 78 for detecting the focusing distance separating the detector 63 and the scene on which the optics 75 focuses.

The detector 73 is for example a digital camera having an electronic image sensor able to take still images of the scene on which the optics 75 is focused.

The electronic image sensor is typically a Charge - Coupled Device (CCD) or an Active - Pixel Sensor (APS) such as produced by a CMOS process.

The images taken by the detector 73 are based on a collection of light received in the visible wavelengths, i.e. from approximately 400 mm to approximately 800 mm. The wavelengths of the light collected by the optics 75 are focused on the detector 73 to form an image reproducing what a human eye would see.

The optics 75 comprises at least one lens. The optics 75 is able to focus on a scene located apart from the detector 63, in particular on the surface 67 or in the vicinity of the surface 67 and to form an image of the scene on the detector 73.

Advantageously, the optics 75 is further able to magnify the size of the scene to create an image in which the elements of the scene, in particular the cuttings 62 are magnified by a magnification ranging from one time the axial dimension of the scene to 200 times the axial dimension of the scene.

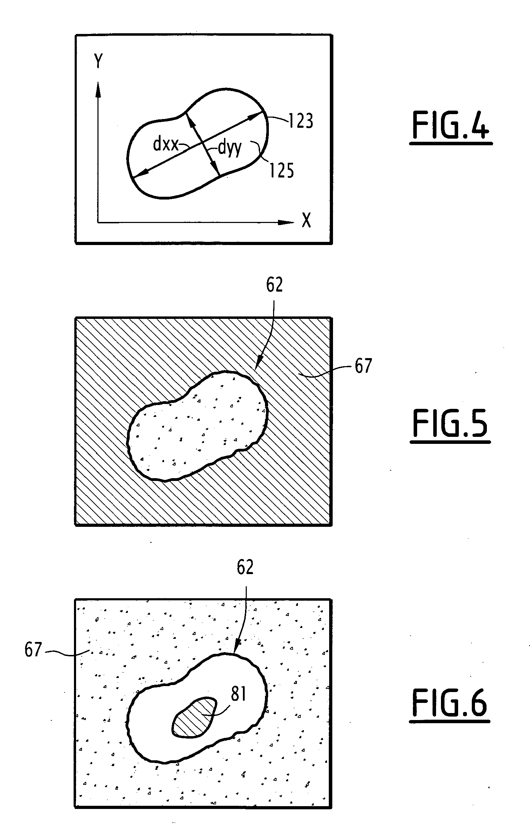

The optics 75 is adjustable by means of the adjustment means 77 so that it can focus on a focusing plane P2 which is movable along an axis A-A' perpendicular to the measuring apparatus 63, relative to a reference plane P1 located on the detector 73. The focusing plane P2 is adjustable at least from the top 81 of each cutting 62, as shown in Figure 6, to the support surface 67, as shown in Figure 5.

A clear image of the scene located at the focusing plane P2 is formed on the detector 73 at the reference plane P1. By contrast, the elements located apart from the focusing plane P2, either above or behind the focusing plane appear blurred on the image.

The detection means 79 are able to record the position of the focusing plane P2 with regard to the reference plane P1 when the optics adjustment means 77 move the focusing plane P2 of the optics 75 along axis A-A'.

The positioning device 65 is able to move the measurement apparatus 63 and the cuttings support surface 67 relative to one another at least in the plane (X, Y).

As a consequence, the positioning device 65 is able to place the optics 75 directly in register with each cutting 62 to be analysed. The positioning device 65 is also able to place the optics 75 directly in register with an area of the surface 67 which is free of cuttings 62, and which is located around each cutting 62 between a cutting 62 and each adjacent cutting 62.

The calculation unit 55 comprises means for calculating at least a first representative dimension $d_{xx}$, $d_{yy}$, $d_{zz}$ of each cutting 62 based on the measurement made by the measurement apparatus 63, and in particular three representative dimensions of the cutting 62.

The calculation unit 55 also comprises means for determining the position at which the cutting 62 was drilled in the well 13, based on at least the first representative dimension $d_{xx}$, $d_{yy}$, $d_{zz}$ of the cutting 62 and based on a mathematical model.

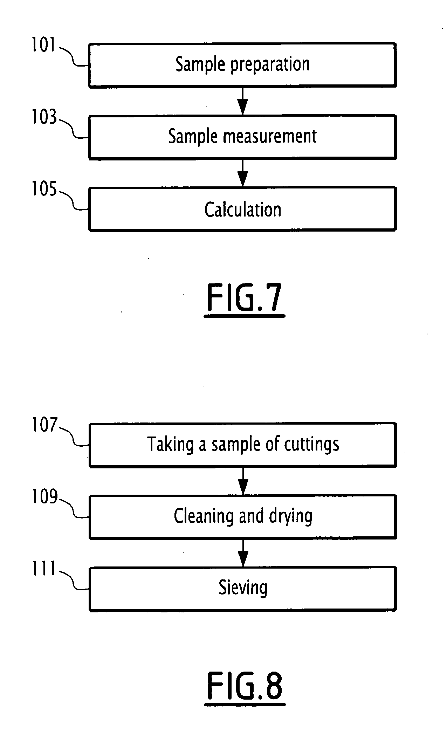

The cuttings analysis method according to the invention, carried out during the operations of drilling a well, will be now described as an example, with reference to Figures 1 and 7.

In reference to Figure 1, during the drilling operations, the drilling tool 15 is driven in rotation by the surface installation 41. The drilling head drills the rocks and sediments at the bottom of cavity 14 to produce cuttings.

During this operation, a drilling fluid, advantageously a liquid, is continuously introduced into the inner space 35 of the drill string 29 by the injection means 43.

The fluid moves downwards as far as the drilling head 27, and passes into the borehole through the drilling head 27.

The liquid cools and lubricates the drill string 29, and is especially used to evacuate from bottom to surface the cuttings generated during the drilling process. Indeed, the liquid collects the solid cuttings resulting from the drilling operation and moves back upwards through the annular space defined between the drill string 29 and the borehole 13. The liquid charged with solids, in particular cuttings, is subsequently evacuated through the discharge pipe 25.

The liquid charged with solids is then evacuated on the shale shaker 45 to separate the solids from the liquid which carries the solids. The cuttings above a certain side, i.e. higher than 0.75 mm, are retained on the sieves 46 of the shale shaker 45 and the liquid flows down through the sieves 46 to the tank 47.

At regular time intervals, e.g. at a period ranging from 15 minutes to 60 minutes, or at regular depth intervals, e.g. ranging from one foot to 15 feet, a sample of cuttings 62 is collected on the shale shaker 45 (sub-step 107 in Figure 8).

The sample is taken to the sample preparation unit 51.

As illustrated in Figure 7, the method according to the invention comprises a first step 101 of preparing the sample, a second step 103 of measuring the sample and a third step 105 of calculation.

At sub-step 109, the cuttings 62 available in the sample are cleaned with a cleaning liquid, such as water. Then, at sub-step 111, the cuttings 62 are separated according to their sizes to form at least two classes of cuttings 62 according to their sizes. Advantageously a series of classes will be established to establish a range of cutting origin in the well.

In a particular example, either cuttings having a very small size, e.g. lower than 0.1 mm are discarded or they are counted in the class of cutting of smaller size (supposed to perfectly follow the main mud flow velocity given by the knowledge of the mud flowrate and the annular section of the space between the drilling pipes and the borehole. The targeted number of class of cutting depends on the desired refinement of the determination of the cutting origin. At least two classes of cuttings 62 are separated in the sieves of the separation stage to be subsequently and separately carried to the sample measurement unit 53, if only two classes are used then the cuttings will be later separated in two origin of location.

The measuring step is then carried out for each class of cuttings separated at sub step 111.

At sub-step 113, the cuttings 62 are first placed on the support surface 67. As shown in Figure 3, the cuttings 62 are preferably spaced apart from each other in the plane (X, Y) so that their contours, taken in projection in the plane X, Y, are spread apart. The cuttings contours preferably do not contact or intersect.

At sub-step 115, the optics means 77 are activated to focus on the support surface 67.

The detection means 79 then records the distance d1 separating the reference plane P1 defined on the detector 73 from the focusing plane P2 on the support surface 67, taken in the immediate vicinity of a cutting 62 to be measured, along axis A-A'.

The measurement apparatus 63 is then activated. A picture of the cuttings 62 laying on the surface 67 is taken at sub-step 117.

Then, at step 119, the optics tuning means 77 are activated to focus on the top 81 of each cutting 62 to be analysed. To this aim, the measurement apparatus 63 is placed in register with the cutting 62, with the detector 73 facing the cutting 62.

When focus is made on the top 81 of the cutting 62, as shown in Figure 6, the distance d2 between the reference plane P1 on the detector 73 and the focusing plane P2 located at the top of the cutting 81 is measured by the detector 79.

Sub-steps 115 to 119 are repeated for each cutting 62 to be measured.

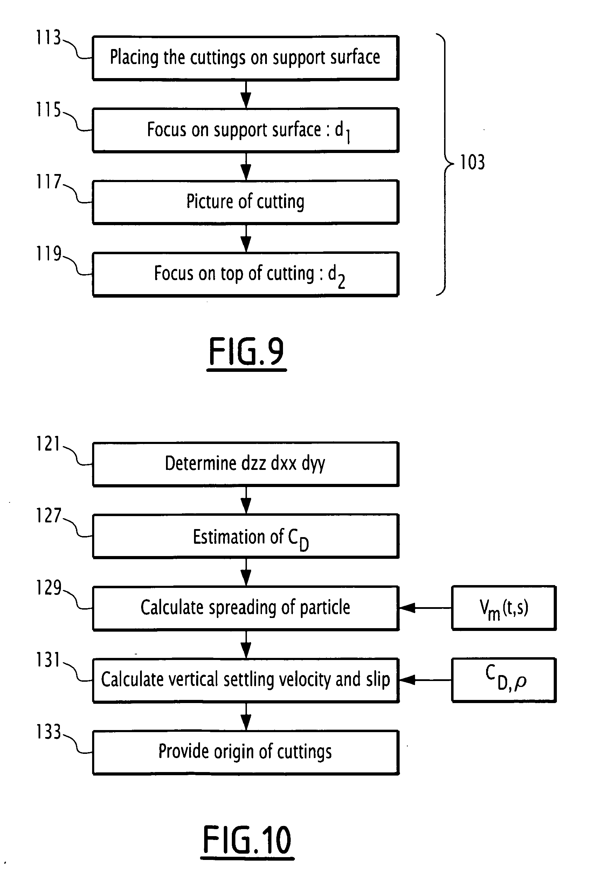

The calculation step 105 is illustrated in Figure 10.

At sub-step 121, three representative dimensions $d_{xx}$, $d_{yy}$, $d_{zz}$ of each cutting 62 are determined based on the measurements carried out in step 103.

According to the invention, a first representative dimension $d_{zz}$ of the cutting is determined by calculating, for each cutting 62, the difference between the first measured distance d1 and the second measured distance d2. This difference is representative of the height $d_{zz}$ of the cutting, taken along axis A-A', when the cutting 62 is placed on the support surface 67.

Additionally, for each cutting 62, two other representative distances $d_{xx}$, $d_{yy}$ are inferred from the image taken at step 117 and shown in Figure 4.

To this aim, a shape recognition software is used to determine the contour 123 of the cutting 62, taken in projection in the plane which the image was taken.

The second representative dimensions $d_{xx}$ and the third representative dimension $d_{yy}$ are estimated based on the determined contour 123.

In a particular embodiment, the dimensions $d_{xx}$ and $d_{yy}$ are determined by using a mathematical calculation such as the method of moments.

The calculation unit 55 hence calculate the inner surface 125 delimited by the contour 123 by applying a density distribution as defined in the following equation:

$$\rho = \left[ 1, (x, y \in S) \; ; \; 0, (x, y \notin S) \right] \qquad (1)$$

The moments are then calculated according to the following equations:

$$I_{xx} = \iint_S \rho (x - x_G)^2 \, dxdy \qquad (2)$$

$$I_{yy} = \iint_S \rho (y - y_G)^2 \, dxdy \qquad (3)$$

$$I_{xy} = \iint_S \rho (y - y_G) \, dxdy \qquad (4),$$

where $x_G$ and $y_G$ are the coordinates of the gravity center of the surface distribution, to obtain an inertial matrix of the shape defined by the following equation:

$$I = \begin{bmatrix} I_{xx} & I_{xy} \\ I_{xy} & I_{yy} \end{bmatrix} \qquad (5)$$

The matrix is diagonalized to obtain Eigen values $\lambda_1$ and $\lambda_2$ which are proportional to $d_{xx}$ and $d_{yy}$ according to the following equation:

$$d_{YY} = 2\sqrt{\lambda_1}, d_{ZZ} = 2\sqrt{\lambda_2} \qquad (6)$$

The orientation of the plane relative to a predefined system of coordinates X, Y is also given by the following equation:

$$\theta = \frac{1}{2} \tan^{-1} \left( \frac{2I_{xy}}{I_{yy} - I_{xx}} \right) \qquad (7)$$

Then, at sub-step 127, an estimate of a quantity representative of the drag of the cutting 62 in the drilling mud is calculated for each cutting 62.

In particular, a drag coefficient $C_D{}^*$ can be calculated based on the representative dimensions.

In a particular example, the core shape function is used to calculate the drag coefficient $C_D{}^*$.

To this end, the following quantity A* is calculated by the following equation:

$$A^{\cdot} = \frac{d_{xx}\, d_{zz}}{d_{yy^2}} \qquad (8)$$

Based on quantity A*, a shape factor for the cutting 62 can be calculated and a correction factor $C_{corr}$ for the particles can also be calculated according to the following equations:

$$f_{shape} = (A^{\cdot})^{0.09} \qquad (9)$$

$$C_{shape} = \sqrt{6A^{\cdot}} - 1 \qquad (10)$$

Then, in this particular example, a modified drag coefficient $C_D^*$ and a modified Reynolds number ($R_e^*$) are calculated based on the following equations:

$$C_D^{\cdot} = \frac{C_D}{C_{shape}} \qquad (11)$$

$$R_{ep}^{\cdot} = \frac{C_{shape}}{f_{shape}} R_{ep} \qquad (12)$$

The particle Reynolds number $R_{ep}$ is calculated based on the following equation:

$$R_{ep} = \frac{\rho_f \left| U_{pz} - U_{fz} \right|}{\mu_f} \qquad (13)$$

in which $U_{Pz}$ is the particle velocity in vertical motion, $U_{fz}$ is the mud velocity, $\mu_F$ is the mud dynamic viscosity and $\rho_f$ is the mud density.

For the calculation of $C_D^*$, a test is advantageously performed to determine if the cutting 12 is a spherical particle or a non spherical particle. To this end, a test such as developed in the article "Method Geology. Mech. Appl. Mat. 9, 1956, pages 313 to 319" is used to test whether the particle is spherical or pseudo spherical or if the particle is non spherical.

If the particle is spherical, a first empirical formula is used to determine a drag coefficient and if the particle is non spherical a second empirical formula is used to determine the drag coefficient.

The first and second empirical formula are based for example on the following equations in which a to h are empirical constants:

$$C_D^{\cdot} = \frac{a}{R_{ep}^{\cdot}} \left[ 1 + b(R_{ep}^{\cdot})c \right] + \frac{d}{1 + \dfrac{e}{(R_{ep}^{\cdot})^f}} \qquad (14),$$

for spherical or pseudo spherical particles;

$$C_D^{\cdot} = \frac{a}{R_{ep}^{\cdot}}\left[1 + b(R_{ep}^{\cdot})c\right] + \frac{d}{1 + \dfrac{g}{(R_{ep}^{\cdot})^h}} \quad (15),$$

for non spherical particles

At sub-step 129, a mathematical model is used to determine the axial position at which the cutting 62 was drilled.

To this aim, the history $V_M$ (t, s) of the velocity of each particle as a function of time and as a function of the trajectory s of the well is estimated by mud flow rate analysis, i.e by the measurements of the flow rate of mud injected by the injection means and by the flow rate of mud emerging from the well.

Based on this data, the spreading of the cuttings along time due to the integral of the slip velocity along the time of advection within the mud is determined at sub-step 129.

As an example of mathematical resolution, the following equation can be solved at each instant of the mud trajectory by an iterative resolution scheme, assuming steady state mudflow and a small slip velocity:

$$\frac{\dfrac{\pi}{8}\cdot d^2 \cdot \rho_f \cdot}{\left(\rho_p + \dfrac{\rho_f}{2}\right)\cdot V_p}\cdot \left|U_p - U_f\right|\cdot (U_p - U_f)\cdot C_D^{\cdot} - \frac{d(U_p - U_f)}{dt}\ (16)$$

in which $\rho_p$ is the particle density, Vp is the cuttings volume and is the front section of the particle perpendicular to the flow direction,

Then, the deviation of each particle can be calculated by the difference :

$$\Delta L = \int_0^{t_{up}} (U_p - U_f)\cdot dt ,(17)$$

in which $t_0$ is the time at which the cutting has been created and $t_{up}$ is the time necessary to reach the surface. $t_{up}$ is given by the following equation:

$$t_{up} = L_d x S_a x Q_{mud}\ (18)$$

in which $L_d$ is the length of drilling, $S_a$ is the annular section of the well, and $Q_{mud}$ is the mud flow rate.

Then, at sub-step 131, based on the density of the cuttings 62, the vertical settling velocity is calculated, using the drag coefficient $C_D{}^*$ to complete the knowledge of the slippage. This calculation is made based on an iterative resolution method.

The limit settling velocity $|U_{pz} - U_{fz}|$ can be calculated by an iterative resolution method using e.g.-the following equation, in which the difference of density between the cuttings contained in the mud and the mud is input.

$$\left|U_{pz} - U_{fz}\right|\cdot (U_{pz} - U_{fz})\cdot C_D^{\cdot} (U_{pz} - U_{fz}) = \frac{(\rho_p - \rho_f)\cdot g \cdot V_p}{\dfrac{\pi}{8}\cdot d^2 \cdot \rho_f}\ (19)$$

in which $\rho_p$ is the particle density, Vp is the cuttings volume and is the front section of the particle perpendicular to the flow direction.

The iterative resolution method for example comprises a initial step in which an initial limit settling velocity $|U_{pz} - U_{fz}|_0$ is estimated, followed by steps of calculating the slip Reynolds number according to equation (13), calculating the modified drag coefficient according to equations (14) and (15) and deriving an updated limit settling velocity based on equation (19) until a convergence on the limit steeling viscosity is reached.

The slippage due to the limit of ascending velocity is then integrated along time to determine the exact origin of the cutting 62.

$$\Delta Lz = \int_0^{t_{up.}} (U_{pz} - U_{fz}) \cdot dt \ ,(20)$$

At sub-step 133, the calculation sub-steps 121 to 131 are repeated for each sieved sample and the cuttings origin and histograms are given.

The method according to the invention therefore allows a very accurate determination of specific dimensions of the cuttings 62 recovered from a well. The method can be used in the vicinity of a well being drilled.

The characterization of the cuttings 62 is more complete, since it allows in particular the determination of three specific dimensions $d_{xx}$, $d_{yy}$, $d_{zz}$ of each cutting 62 in order to improve the models which simulate the behaviour of the cuttings 62 in the drilling mud, from the point at which they are drilled to the sampling point.

In particular, the drag coefficient $C_D$ of each cutting can be estimated very accurately by simple means which can be implemented in a drilling installation.

In a variation, the first distance $d_1$ and the second distance $d_2$ can be determined by other means which do not enter in contact with the cuttings 62, such as other optical method or ultrasonic methods. In the case of acoustic determination of the cutting thinness by acoustic the method consist to analyse the time of reflected wave on the cutting surface.

**Claims**

1. Method for analyzing at least a cutting (62) emerging from a well (13), the method comprising the following steps:

   - disposing at least a cutting (62) on a cuttings support surface (67);
   - placing a measuring apparatus (63) over the support surface (67), the measuring apparatus (63) facing the cutting (62), at a distance from the cutting (62);
   - measuring a first distance ($d_1$) between a reference plane and the support surface (67) in the vicinity of the cutting (62) along an axis (A-A') transverse to the support surface (67) using the measuring apparatus (63);
   - measuring a second distance ($d_2$) between the reference plane and the cutting (62) along the transverse axis (A-A'), using the measuring apparatus (63);
   - calculating a first representative dimension ($d_{zz}$) of the cutting (62) based on the difference between the first distance ($d_1$) and the second distance ($d_2$); and
   - determining a position at which the cutting (62) was drilled in the well (13) based on a mathematical model using the first representative dimension ($d_{zz}$) of the cutting (62) and the history, as estimated by mud flow rate analysis, of the velocity of each cutting as a function of time and as a function of the trajectory of the well.

2. Method according to claim 1, **characterized in that** the measuring apparatus (63) comprises an optical measuring device (71);
   the measuring of the first distance ($d_1$) comprising focusing the optical measuring device (71) on the support surface (63) and measuring a first focusing distance, the first distance ($d_1$) being derived from the measured first focusing distance;
   the measuring of the second distance ($d_2$) comprising a step of focusing on the top (81) of the cutting (62) and measuring a second focusing distance, the second distance ($d_2$) being derived from the measured second focusing distance.

3. Method according to claim 2, **characterized in that** it comprises a step of capturing an image of the cutting (62) in at least a measurement plane, the method comprising determining at least a second representative dimension ($d_{yy}$; $d_{zz}$) of the cutting (62) based on a distance measured from the captured image.

4. Method according to claim 3, **characterized in that** it comprises a step of determining the contour (123) of the cutting (62) on the image, the calculating step comprising determining the representative second dimension ($d_{yy}$; $d_{zz}$) based on the measured contour (123).

5. Method according to claim 4, **characterized in that** the calculation step comprises calculating the moments of the surface S delimited by the contour (123) with a predetermined density distribution, in particular a density distribution such as:

1,(x,y S) ; 0,(x,y S).

6. Method according to any one of the preceding claims, **characterized in that** the support surface (67) has a contrast with at least one cutting (62) to be analyzed.

7. Method according to any one of the preceding claims, **characterized in that** it comprises analyzing a plurality of cuttings (62) emerging from the well, the cuttings (62) being separated from each other on the support surface (67).

8. Method according to anyone of the preceding claims, **characterized in that** it comprises recovering a sample of cuttings (62) from the well (13), and sieving the sample to remove some of the recovered cuttings (62) from the cuttings to be analyzed.

9. Method according to anyone of the preceding claims, **characterized in that** it comprises a step of calculating a drag coefficient ($C_D$) of each cutting (62) based on the first representative dimension ($d_{zz}$) calculated at the calculating step.

**Patentansprüche**

1. Verfahren zum Analysieren wenigstens eines Schneidabfalls (62), der aus einem Bohrloch (13) austritt, wobei das Verfahren die folgenden Schritte umfasst:

   - Anordnen wenigstens eines Schneidabfalls (62) auf einer Schneidabfall-Tragoberfläche (67);
   - Positionieren einer Messvorrichtung (63) über der Tragoberfläche (67), wobei die Messvorrichtung (63) dem Schneidabfall (62) in einem Abstand von dem Schneidabfall (62) zugewandt ist;
   - Messen einer ersten Strecke ($d_1$) zwischen einer Referenzebene und der Tragoberfläche (67) in der Umgebung des Schneidabfalls (62) längs einer Achse (A-A') quer zu der Tragoberfläche (67) unter Verwendung der Messvorrichtung (63);
   - Messen einer zweiten Strecke ($d_2$) zwischen der Referenzebene und dem Schneidabfall (62) längs der Querachse (A-A') unter Verwendung der Messvorrichtung (63);
   - Berechnen einer ersten repräsentativen Abmessung ($d_{zz}$) des Schneidabfalls (62) anhand der Differenz zwischen der ersten Strecke ($d_1$) und der zweiten Strecke ($d_2$); und
   - Bestimmen einer Position, bei der der Schneidabfall (62) in dem Bohrloch (13) gebohrt wurde, anhand eines mathematischen Modells, das die erste repräsentative Abmessung ($d_{zz}$) des Schneidabfalls (62) und die durch eine Schlammdurchflussmengen-Analyse geschätzte Historie der Geschwindigkeit jedes Schneidabfalls als Funktion der Zeit und als Funktion des Verlaufs des Bohrlochs verwendet.

2. Verfahren nach Anspruch 1, **dadurch gekennzeichnet, dass** die Messvorrichtung (63) eine optische Messvorrichtung (71) umfasst;

   wobei das Messen der ersten Strecke ($d_1$) das Fokussieren der optischen Messvorrichtung (71) auf die Tragoberfläche (63) und das Messen einer ersten Brennweite umfasst, wobei die erste Strecke ($d_1$) aus der gemessenen ersten Brennweite abgeleitet wird; und

   wobei das Messen der zweiten Strecke ($d_2$) einen Schritt des Fokussierens auf der Oberseite (81) des Schneidabfalls (62) und das Messen einer zweiten Brennweite umfasst, wobei die zweite Strecke ($d_2$) aus der gemessenen zweiten Brennweite abgeleitet wird.

3. Verfahren nach Anspruch 2, **dadurch gekennzeichnet, dass** es einen Schritt des Aufnehmens eines Bildes des Schneidabfalls (62) in wenigstens einer Messebene umfasst, wobei das Verfahren das Bestimmen wenigstens einer zweiten repräsentativen Abmessung ($d_{yy}$; $d_{zz}$) des Schneidabfalls (62) anhand einer Strecke, die in dem aufgenommenen Bild gemessen wird, umfasst.

4. Verfahren nach Anspruch 3, **dadurch gekennzeichnet, dass** es einen Schritt des Bestimmens des Umrisses (123) des Schneidabfalls (62) auf dem Bild umfasst, wobei der Rechenschritt das Bestimmen der repräsentativen zweiten Abmessung ($d_{yy}$; $d_{zz}$) anhand des gemessenen Umrisses (123) umfasst.

5. Verfahren nach Anspruch 4, **dadurch gekennzeichnet, dass** der Rechenschritt das Berechnen der Momente der Oberfläche S, die durch den Umriss (123) begrenzt ist, mit einer vorgegebenen Dichteverteilung, insbesondere einer Dichteverteilung wie etwa 1, (x,y S); 0, (x,y S) umfasst.

**6.** Verfahren nach einem der vorhergehenden Ansprüche, **dadurch gekennzeichnet, dass** die Tragoberfläche (67) einen Kontrast mit wenigstens einem zu analysierenden Schneidabfall (62) bildet.

**7.** Verfahren nach einem der vorhergehenden Ansprüche, **dadurch gekennzeichnet, dass** es das Analysieren mehrerer Schneidabfälle (62), die von dem Bohrloch austreten, umfasst, wobei die Schneidabfälle (62) auf der Tragoberfläche (67) voneinander getrennt sind.

**8.** Verfahren nach einem der vorhergehenden Ansprüche, **dadurch gekennzeichnet, dass** es das Wiedergewinnen einer Probe von Schneidabfällen (62) von dem Bohrloch (13) und das Sieben der Probe, um einige der wiedergewonnenen Schneidabfälle (62) aus den zu analysierenden Schneidabfällen zu entfernen, umfasst.

**9.** Verfahren nach einem der vorhergehenden Ansprüche, **dadurch gekennzeichnet, dass** es einen Schritt des Berechnens eines Luftwiderstandskoeffizienten ($C_D$) jedes Schneidabfalls (62) anhand der im Rechenschritt berechneten ersten repräsentativen Abmessung ($d_{zz}$) umfasst.

**Revendications**

**1.** Procédé d'analyse d'au moins un déblai (62) sortant d'un puits (13), le procédé comprenant les étapes suivantes :

- disposition d'au moins un déblai (62) sur une surface de support de déblai (67) ;
- placement d'un appareil de mesure (63) sur la surface de support (67), l'appareil de mesure (63) faisant face au déblai (62), à une distance du déblai (62) ;
- mesure d'une première distance ($d_1$) entre un plan de référence et la surface de support (67) au voisinage du déblai (62) le long d'un axe (A-A') transversal à la surface de support (67) en utilisant l'appareil de mesure (63) ;
- mesure d'une seconde distance ($d_2$) entre le plan de référence et le déblai (62) le long de l'axe transversal (A-A'), en utilisant l'appareil de mesure (63) ;
- calcul d'une première dimension représentative ($d_{zz}$) du déblai (62) en se basant sur la différence entre la première distance ($d_1$) et la seconde distance ($d_2$) ; et
- détermination d'une position à laquelle le déblai (62) a été foré dans le puits (13) en se basant sur un modèle mathématique utilisant la première dimension représentative ($d_{zz}$) du déblai (62) et l'historique, tel qu'estimé par l'analyse du débit de boue, de la vitesse de chaque déblai comme une fonction du temps et comme une fonction de la trajectoire du puits.

**2.** Procédé selon la revendication 1, **caractérisé en ce que** l'appareil de mesure (63) comprend un dispositif de mesure optique (71) ;
la mesure de la première distance ($d_1$) comprenant la focalisation du dispositif de mesure optique (71) sur la surface de support (63) et la mesure d'une première distance de focalisation, la première distance ($d_1$) étant dérivée de la première distance de focalisation mesurée ;
la mesure de la seconde distance ($d_2$) comprenant une étape de focalisation sur le dessus (81) du déblai (62) et de mesure d'une seconde distance de focalisation, la seconde distance ($d_2$) étant dérivée de la seconde distance de focalisation mesurée.

**3.** Procédé selon la revendication 2, **caractérisé en ce qu'**il comprend une étape de capture d'une image du déblai (62) dans au moins un plan de mesure, le procédé comprenant la détermination d'au moins une seconde dimension représentative ($d_{yy}$ ; $d_{zz}$) du déblai (62) en se basant sur une distance mesurée à partir de l'image capturée.

**4.** Procédé selon la revendication 3, **caractérisé en ce qu'**il comprend une étape de détermination du contour (123) du déblai (62) sur l'image, l'étape de calcul comprenant la détermination de la seconde dimension représentative ($d_{yy}$ ; $d_{zz}$) en se basant sur le contour mesuré (123).

**5.** Procédé selon la revendication 4, **caractérisé en ce que** l'étape de calcul comprend le calcul des moments de la surface S délimitée par le contour (123) avec une distribution de densité prédéterminée, en particulier une distribution de densité telle que :

1, (x,y S) ; 0, (x,y S).

**6.** Procédé selon l'une quelconque des revendications précédentes, **caractérisé en ce que** la surface de support (67) a un contraste avec au moins un déblai (62) devant être analysé.

7. Procédé selon l'une quelconque des revendications précédentes, **caractérisé en ce qu'**il comprend l'analyse d'une pluralité de déblais (62) sortant du puits, les déblais (62) étant séparés les uns des autres sur la surface de support (67).

8. Procédé selon l'une quelconque des revendications précédentes, **caractérisé en ce qu'**il comprend la récupération d'un échantillon de déblais (62) du puits (13), et le tamisage de l'échantillon pour enlever une partie des déblais récupérés (62) parmi les déblais devant être analysés.

9. Procédé selon l'une quelconque des revendications précédentes, **caractérisé en ce qu'**il comprend une étape de calcul d'un coefficient de traînée ($C_D$) de chaque déblai (62) basée sur la première dimension représentative ($d_{zz}$) calculée à l'étape de calcul.

FIG.1

FIG.2

FIG.3

FIG.4

FIG.5

FIG.6

101 — Sample preparation

103 — Sample measurement

105 — Calculation

## FIG.7

107 — Taking a sample of cuttings

109 — Cleaning and drying

111 — Sieving

## FIG.8

113 — Placing the cuttings on support surface

115 — Focus on support surface : $d_1$

117 — Picture of cutting

119 — Focus on top of cutting : $d_2$

103

## FIG.9

121 — Determine dzz dxx dyy

127 — Estimation of $C_D$

129 — Calculate spreading of particle ← $V_m(t,s)$

131 — Calculate vertical settling velocity and slip ← $C_{D,\rho}$

133 — Provide origin of cuttings

## FIG.10

**EP 2 656 004 B1**

**REFERENCES CITED IN THE DESCRIPTION**

**Non-patent literature cited in the description**

- *Method Geology. Mech. Appl. Mat.,* 1956, vol. 9, 313-319